# FASCICULE DE BREVET EUROPEEN

(11) **EP 1 075 715 B1**
(45) Date de publication et mention de la délivrance du brevet: **23.10.2002**
(21) Numéro de dépôt: 00907708.2
(22) Date de dépôt: 24.02.2000
(51) Int. Cl.: H01R 39/06, H01R 39/38

(54) **MONTAGE PORTE-BALAIS POUR MACHINES ELECTRIQUES, TELLES QU'UN DEMARREUR DE VEHICULE AUTOMOBILE**
BÜRSTENHALTERMONTAGE FÜR ELEKTRISCHE MASCHINEN WIE KFZ-ANLASSER
BRUSH-HOLDER MOUNT FOR ELECTRIC MACHINES, SUCH AS MOTOR VEHICLE STARTER

(30) Priorité: 26.02.1999 FR 9902416
(43) Date de publication de la demande: 14.02.2001
(73) Titulaire: VALEO EQUIPEMENTS ELECTRIQUES MOTEUR, 94017 Creteil Cedex (FR)
(72) Inventeur: BASTIDE, Laurent, F-69008 Lyon (FR); MAGNIER, Pierre, F-69002 Lyon (FR)
(74) Mandataire: Gamonal, Didier
(86) Numéro de dépôt international: FR0000455
(87) Numéro de publication internationale: WO00051209

(56) Documents cités:
- DE-A- 4 027 176
- FR-A- 2 389 253
- FR-A- 2 536 602
- US-A- 5 744 889

## Description

La présente invention concerne un montage porte balais, notamment pour démarreur de véhicule automobile.

On connaît déjà, notamment par FR-A-2.389.253, un montage porte balais comportant deux pièces fixées l'une sur l'autre au moyen de pattes de verrouillage élastiques. L'une de ces deux pièces est une embase destinée à être rapportée sur un palier, tandis que l'autre est une pièce de guidage qui définit deux cages dans lesquelles les balais sont emprisonnés avec leurs ressorts lorsque ladite pièce de guidage est en place sur l'embase.

Pour permettre d'assurer le centrage de ces deux pièces sur le palier, l'embase présente plusieurs orifices destinés à recevoir des pions de centrage portés par ce palier. En outre, elle est traversée par un moyeu cylindrique à l'intérieur duquel est reçu un élément annulaire appelé "coussinet" qui est destiné à assurer le guidage en rotation de l'arbre de la machine.

Comme on l'aura compris, un tel montage pose un problème d'étanchéité et nécessite de prévoir entre l'embase et le palier des moyens particuliers pour éviter toute pénétration d'eau à l'intérieur de ce dernier.

On connaît également, notamment par FR-A-2.536.602 un palier en matière plastique qui porte des cages de guidage qui sont d'une pièce avec ledit palier et qui sont moulées avec celui-ci.

Toutefois, avec un tel palier, la mise en place des balais et de leurs ressorts dans les cages de guidage s'avère délicate, car il faut réaliser en même temps le montage du palier sur la carcasse, le montage des balais et des ressorts à l'intérieur de leurs cages, le centrage de l'ensemble par rapport à la carcasse de la machine électrique et à l'arbre de l'induit.

En outre, cette solution n'est pas mécaniquement satisfaisante, car le palier moulé a tendance à se déformer sous l'effort des tirants qui assurent sa fixation à la carcasse. Le fluage dû à la température ambiante aggrave ce phénomène.

Un but de l'invention est de pallier les inconvénients des montages porte balais connus à ce jour et de proposer un montage étanche, d'une grande simplicité de réalisation et d'un nombre de pièces réduit.

Elle propose à cet effet un montage porte balais pour machine électrique comportant deux pièces rapportées l'une sur l'autre, l'une qui présente plusieurs cages de guidage qui reçoivent chacune un balai et au moins un organe élastique, l'autre qui constitue une pièce formant embase qui comporte des moyens permettant son assemblage sur un palier métallique, la pièce formant embase comportant un moyeu recevant un élément annulaire destiné à assurer le guidage en rotation de l'arbre de la machine, caractérisé en ce que le moyeu est fermé à son extrémité destinée à être opposée à l'arbre de la machine, la pièce formant embase étant apte à assurer par elle-même l'étanchéité par rapport au palier.

Avantageusement, la pièce formant embase présente des pions de fixation destinés à traverser des trous complémentaires du palier.

Cette pièce formant socle présente également des pions de fixation destinés à traverser des trous complémentaires de la pièce de guidage des balais.

En écrasant les pions, par exemple lors d'une opération de rivetage à chaud ou par soudage par ultrasons, on peut obtenir des fixations étanches tout en permettant de rattraper les tolérances de fabrication.

Bien entendu d'autres systèmes d'assemblage peuvent être utilisés tels que des vis, des rivets etc., mais cela est moins avantageux car cela fait appel à des pièces supplémentaires. Les pions sont ici venus de moulage avec le socle.

Ce socle est doté de pattes élastiquement déformables propres à coopérer par encliquetage avec des ergots venus de moulage avec la pièce de guidage.

On peut donc réaliser un assemblage temporaire du socle avec la pièce de guidage puis rapporter ce sous-ensemble sur le palier et procéder à un assemblage final du socle avec la pièce de guidage et avec le palier encaissant les efforts de fixation de l'ensemble ainsi constitué à la carcasse de la machine électrique telle qu'un démarreur.

D'autres caractéristiques et avantages de l'invention ressortiront encore de la description qui suit. Cette description est purement illustrative et non limitative. Elle doit être lue en regard des dessins annexés sur lesquels :
- la figure 1a est une représentation en perspective de la pièce de guidage d'un montage conforme à un mode de réalisation possible de l'invention ;
- la figure 1b est une représentation en perspective d'une pièce formant embase destinée à être assemblée sur la pièce de guidage de la figure 1a ;
- la figure 2 est une vue de dessus illustrant l'assemblage des pièces des figures 1a et 1b sur un palier de machine électrique ;
- la figure 3 est une vue en coupe axiale selon la ligne III-III de la figure 2;
- la figure 4 est une représentation en perspective éclatée du montage porte balais réalisé avec les différents éléments représentés sur la figure 3 ;
- la figure 5 est une représentation schématique en coupe d'un montage porte balais conforme à un mode de réalisation possible de l'invention.

Le montage porte balais illustré sur les figures comporte une pièce de guidage 3 de balais 1 et un socle 4, qui sont destinés à être assemblés sur le palier arrière 5 d'une machine électrique, qui est par exemple un démarreur de véhicule automobile.

La pièce 3 et le socle 4 sont ici en matière moulable et électriquement isolante. Dans les figures le socle 4 et la pièce 3 sont en matière plastique moulable avantageusement renforcée par des fibres, telles que des fibres de verre.

La matière de la pièce 3 a des propriétés différentes de celles du socle 4.

Plus précisément la matière de la pièce 3 est plus résistante à la chaleur et plus rigide que celle du socle 4.

La grande élasticité de la matière du socle 4 permet de réaliser dans celui-ci des pattes de fixation 4a élastiquement déformables pour assemblage temporaire par encliquetage, de manière décrite ci-après, du socle 4 avec la pièce 3 et formation d'un sous-ensemble imperdable manipulable et transportable, que l'on fixe ultérieurement sur le palier arrière 5 de la machine électrique. Le palier 5 est ici métallique et a une forme annulaire.

Le socle 4 est conformé pour être fixé sur le palier arrière 5 et pour fixer définitivement la pièce de guidage 3. Le socle 4 est donc une pièce intermédiaire entre le palier 5 et la pièce 3.

Ici les fixations de la pièce 3 et du palier 5 au socle 4 sont avantageusement des fixations étanches.

Le socle 4 sert de fond à des cages de guidage 3c que comporte la pièce 3.

Plus précisément la pièce de guidage 3 (figure 1a) comporte quatre cages de guidage 3c qui sont moulées d'une pièce avec un corps central 3d de forme générale cylindrique. Les cages 3c sont réparties, ici de manière régulière, autour du corps central 3d.

Chaque cage de guidage 3c est de section de forme générale trapézoïdale et est destinée à recevoir un balai 1, ainsi qu'un organe élastique 7, ici sous forme d'un ressort.

Les balais 1 sont destinés à venir en contact, de manière connue en soi, avec des pistes collectrices que présente la machine électrique .

Cette pièce de guidage 3 est réalisée par moulage en une matière qui est électriquement isolante et qui est choisie pour résister aux températures de fonctionnement élevées des balais 1. La matière de la pièce 3 est par exemple une résine thermodurcissable.

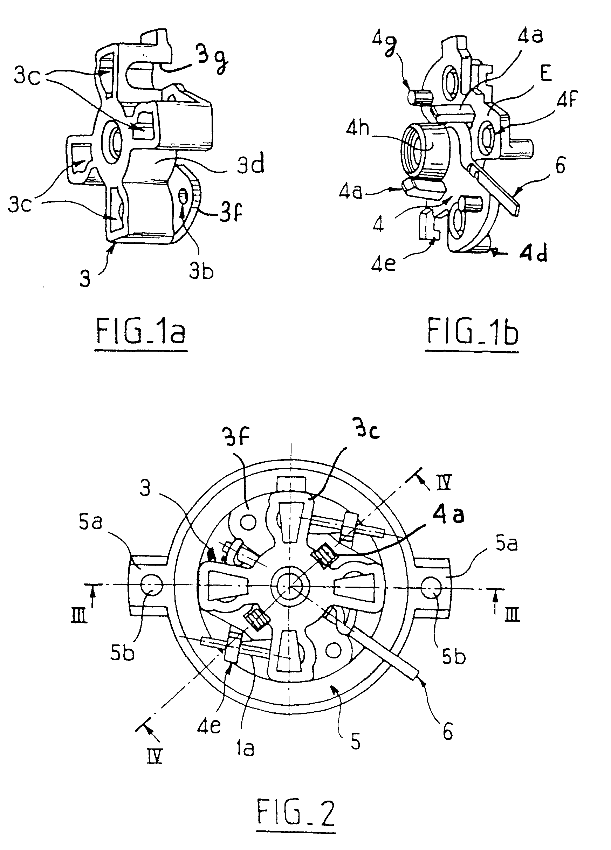

Le socle 4 (figure 1b) présente une partie principale de forme générale plate qui définit l'embase E sur laquelle la pièce 3 est destinée à venir en appui. L'embase E constitue le fond des cages de guidage 3c et présente sur chacune de ses faces des pions saillants 4g et 4d dirigés axialement en sens inverse.

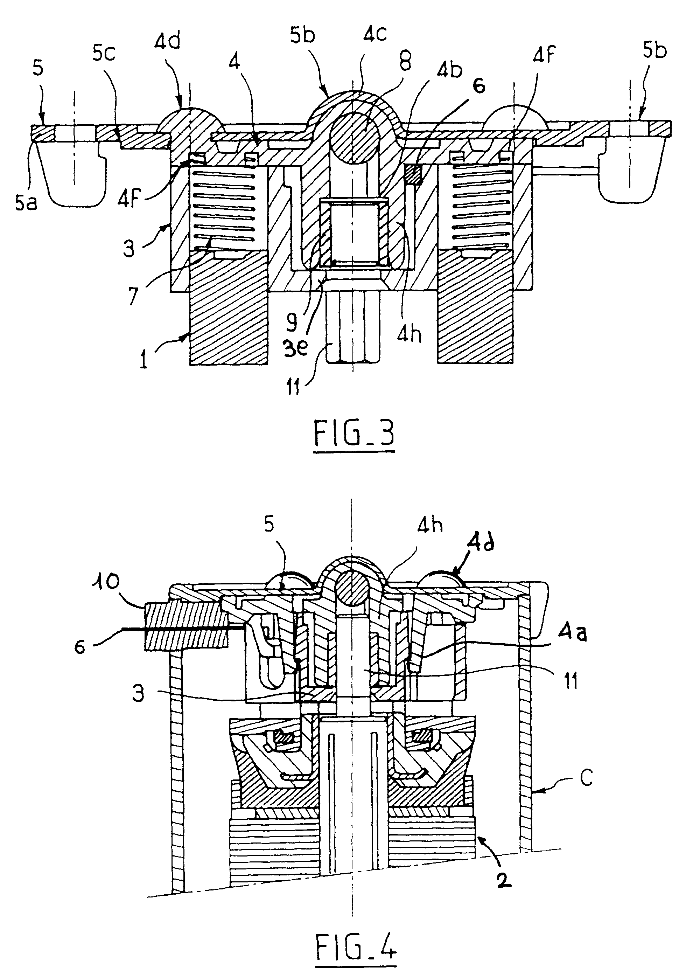

Sur sa face destinée à recevoir ladite pièce 3, cette embase E porte en saillie deux pattes 4a de verrouillage élastiquement déformables qui se terminent par des crochets saillants destinés à coopérer par encliquetage avec des ergots complémentaires (non référencés à la figure 4) que présente extérieurement le corps central 3d de la pièce 3 entre deux cages 3c. Les pattes 4a sont inclinées.

Elle porte également des pions de centrage 4g destinés à coopérer avec des orifices complémentaires 3b que présente la pièce 3.

Les orifices 3b appartiennent à des oreilles 3f reliant chacune une cage 3c au corps central 3d. Ces oreilles sont destinées à venir en contact avec l'embase E et rigidifient la pièce 3.

En outre, l'embase du socle 4 présente des rainures annulaires 4f qui sont destinées à permettre le centrage des ressorts 7 et qui sont destinées à recevoir ceux-ci à leur extrémité opposée aux balais 1.

Les ressorts 7 sont ici des ressorts à boudin. En variante les ressorts 7 peuvent avoir une autre forme. Les balais 1 sont d'une manière générale soumis à l'action d'organes élastiques 7 prenant appui sur l'embase E.

Le socle 4 comporte également un moyeu cylindrique 4h qui est destiné à être reçu dans le corps central 3d lorsque la pièce de guidage 3 est en place sur le socle 4. Le moyeu 4h est intérieurement de diamètre étagé avec formation d'un épaulement 4b au changement de diamètre.

Le socle 4 est réalisé par moulage en une matière électriquement isolante. Cette matière est par exemple de type thermoplastique et est choisie de façon à permettre une élasticité suffisante pour les pattes de fixation 4a.

Comme visible à la figure 4 le corps central 3d présente extérieurement des portions de forme tronconique délimitée par les ergots précités. Les pattes 4a par coopération avec cette portion sont admises à se déployer jusqu'à ce qu'elles viennent en prise avec les ergots.

Un coussinet 9 annulaire est emmanché à force à l'intérieur du moyeu 4h. Ce coussinet 9 est destiné à assurer la rotation de l'arbre de la machine électrique par rapport au palier 5 et est en un matériau de friction du type bronze ou équivalent.

La friction entre ce coussinet 9 et le moyeu 4h est suffisante pour empêcher la rotation de ce coussinet 9 par rapport au socle 4. Cette liaison entre le moyeu 4h et le coussinet 9 peut en outre être renforcée par le choix, pour le moyeu 4h et ledit coussinet 9, de formes complémentaires s'opposant à toute rotation de l'un par rapport à l'autre.

En variante le coussinet est fixé par soudage par friction au moyeu 4h.

A l'intérieur du moyeu 4h, ce coussinet 9 est en butée contre l'épaulement 4b que présente ledit moyeu 4h. Il est en outre empêché de sortir dudit moyeu par une paroi en retour 3e qui ferme partiellement le corps central 3d à son extrémité opposée à l'embase E du socle 4 et qui, avec l'épaulement 4b, empêche tout déplacement axial du coussinet 9.

La paroi 3e est dirigée radialement vers l'intérieur du corps 3d et est trouée pour le passage d'un arbre 11.

Sur les figures, le palier 5 a été représenté sous la forme d'un palier plat. D'autres types de paliers pourraient bien entendu également être envisagés et notamment des paliers de forme en cloche.

Le palier 5 comporte deux oreilles 5a diamétralement opposées qui présentent chacune un orifice 5d destiné à permettre la fixation dudit palier sur la carcasse de la machine électrique, au moyen de tirants (non représentés). Le palier 5 présente en outre, entre ces oreilles 5a et le reste dudit palier 5, un décrochement 5c qui assure le centrage dudit palier 5 sur la carcasse C de la machine électrique dotée à l'intérieur de la carcasse C, de manière connue, d'un induit 2 et d'un arbre d'induit 11.

Par ailleurs, le socle 4 présente sur sa face directement en regard du palier 5 au moins une proéminence 4c destinée à être reçue dans une alvéole complémentaire 5b que présente ledit palier 5. Cette alvéole 5b n'est pas débouchante afin que le palier soit étanche. Dans l'exemple illustré sur les figures, cette proéminence 4c est une proéminence centrale et est constituée par la paroi qui ferme le moyeu 4h. Ici la proéminence 4b est en forme de calotte sphérique.

Le socle 4 comporte en outre, du même côté, des pions 4d reçus dans des trous aménagés dans le palier 5. Ces pions 4d sont destinés à être rivetés à chaud ou par ultrasons une fois que le socle 4 est en place sur le palier 5. Ce rivetage confère une excellente étanchéité à l'ensemble. D'autres systèmes d'assemblages peuvent bien entendu être envisagés.

Le socle 4 reçoit à l'intérieur de son moyeu 4h, entre le fond que constitue la proéminence centrale 4c et le coussinet 9, un élément 8 sur lequel l'arbre d'induit 11 est destiné à venir en butée axiale.

Cet élément 8 est par exemple une bille qui est emmanchée dans le socle 4 et qui est maintenue par friction dans celui-ci. En jouant sur la force exercée sur ladite bille 8 lors de son emmanchement, on règle sa position en fonction de la longueur du bout d'arbre 11 de façon à avoir, après assemblage du démarreur, un jeu axial d'induit de valeur réduite.

Dans d'autres modes de réalisation, on peut remplacer la bille sphérique par une pièce d'une autre géométrie emmanchée dans le socle.

En variante encore, cette butée peut être réalisée par une forme venue de moulage avec le socle.

Egalement, sur sa face qui reçoit la pièce de guidage 3, le socle 4 comporte des pattes 4e (figures 1b et 2) en forme de crochet qui sont destinées à servir de structure de maintien pour les éléments filaires 1a destinés à relier deux des balais à la masse, avant que ces éléments filaires ne soient soudés sur le palier 5.

Les éléments filaires 1a sont solidaires desdits balais, tandis que les pattes 4e s'étendent en saillie parallèlement à l'embase E et perpendiculairement par rapport aux pattes 4a et aux pions 4g, 4d parallèles entre eux.

Le socle 4 porte en outre un élément passe-fil 10 en une matière isolante souple (plastique par exemple). Cet élément passe-fil 10 est destiné à traverser la carcasse C de la machine électrique pour assurer la connexion à une borne d'alimentation positive des deux balais qui ne sont pas à la masse. Cet élément passe-fil est comprimé entre le palier 5 et la carcasse, réalisant ainsi une bonne étanchéité.

L'assemblage des éléments qui viennent d'être décrits se fait de la façon suivante.

Les deux balais positifs 1 portent à fixation des éléments filaires 1c préalablement soudés sur l'élément de connexion 6 qui est destiné à être placé dans l'élément passe-fil 10. Ils sont ensuite montés dans les cages de guidage 3c, avec les deux autres balais.

Puis, les quatre ressorts de balais 7 sont également introduits dans lesdites cages 3c.

Le socle 4, préalablement muni du coussinet 9 et de la bille 8, est assemblé sur la pièce 3, les deux pièces étant maintenues l'une par rapport à l'autre par les pattes de verrouillage élastiques 4a. On obtient ainsi un sous-ensemble monobloc facile à entreposer ou à manipuler dans un atelier de production.

Ce sous-ensemble est ensuite monté sur le palier 5 en plaçant les éléments filaires 1a sous les pattes 4e du socle. Puis on procède au rivetage par les pions 4d.

Ensuite, pour maintenir définitivement la pièce 3 sur le socle 4, on effectue le rivetage des pions 4g. Les pattes de fixation 4a n'ont en effet qu'un rôle temporaire et ne sont destinées qu'à faciliter le pré-assemblage avant les opérations de rivetage.

Les extrémités des liaisons 1a sont ensuite soudées électriquement sur le palier métallique 5 et le passe-fil 10 est mis en place.

Enfin, le palier complet est monté sur l'extrémité de l'arbre 11 et la carcasse C.

Des tirants passant par les oreilles 5a du palier 5 permettent la fixation de celui-ci sur le moteur et mettent en compression le passe-fil 6, ce qui assure l'étanchéité et l'isolation de la liaison électrique.

Comme on l'aura compris, un tel montage présente de nombreux avantages.

Il est facile à assembler sur le démarreur. Notamment, les pièces 3 et 4 peuvent être assemblées avec les balais 1, les ressorts 7, les connexions, le palier 5, le passe-fil 6, le coussinet 9 et la butée d'induit 8 indépendamment du reste du démarreur.

Egalement, les différents éléments de ce sous-ensemble sont aptes à être assemblés entre eux de manière simple, sans pièces additionnelles de fixation. Il en résulte une réduction des coûts.

En outre, le montage qui vient d'être décrit assure de lui-même l'étanchéité de la partie arrière de la machine électrique, et ce sans qu'aucune pièce supplémentaire spécifique ne soit nécessaire.

On notera que le palier 5 présente des oreilles 5a rigidifiées par des retours. Le palier 5 est également rigidifié par l'alvéole 5b et est conformé pour encaisser les efforts engendrés par les tirants en sorte que la pièce de guidage 3 et le socle 4 sont ménagés.

On notera également que la paroi 3e est chanfreinée pour faciliter le montage de l'arbre 11 et que les cages 3c sont dotées d'ouvertures borgnes 3g pour mieux évacuer la chaleur et passer les éléments filaires 1a, 1c des balais 1.

En variante on peut doter les cages 3c d'un revêtement constituant une barrière thermique comme décrit dans le document FR-A-2 536 602 précité.

On appréciera que la forme étoilée de la pièce de guidage 3, avec ses quatre cages 3c, s'étendant en saillie, ici radiale, vers l'extérieur par rapport au corps central 3d, permet de loger et d'implanter à l'extérieur du corps 3d, entre les cages 3c les oreilles 3f à trous 3b, les pions 4g associés et les pattes 4e, 4a.

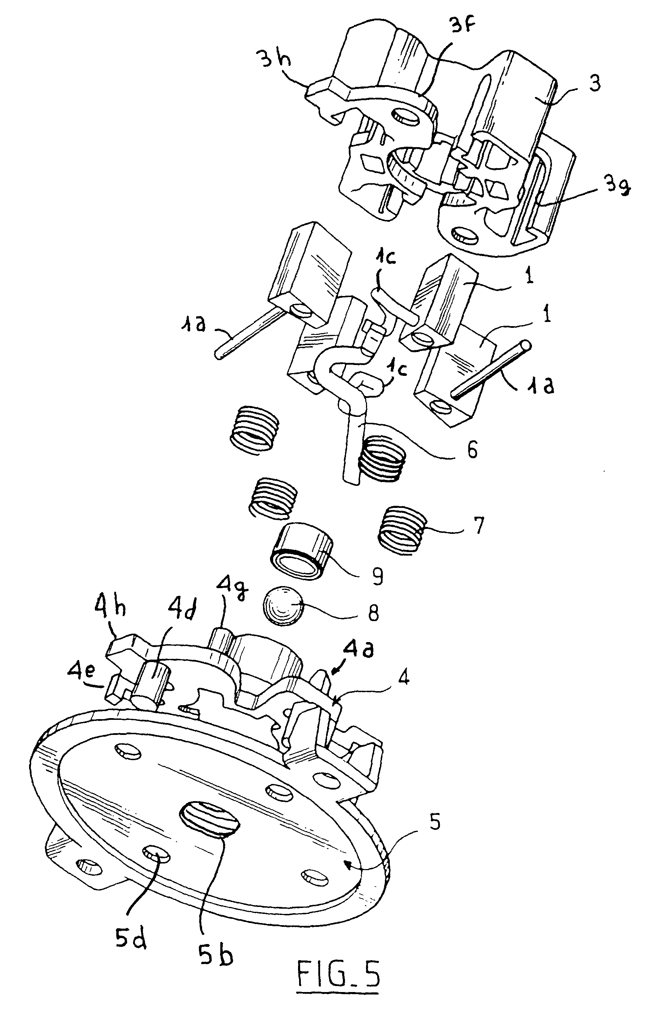

Comme visible par exemple à la figure 5 la pièce 3 et le socle 4 présentent chacun une patte respectivement 3h et 4h, destinée à venir en contact l'une avec l'autre pour former un détrompeur et indexer angulairement dans la bonne position la pièce 3 par rapport au socle 4. Bien entendu le détrompeur peut avoir une autre forme.

D'une manière générale des moyens de détrompage interviennent entre le socle 4 et la pièce 3. Grâce à l'invention et également à la forme étoilée de la pièce 3, le socle 4 a un maximum de fonctions.

La patte 3h s'étend en saillie vers l'extérieur par rapport à l'une des cages de guidage 3c en étant venue de matière par moulage avec cette cage 3.

Les pattes 4e, 4a sont groupées par paire, diamétralement opposées, les pattes 4e étant plus éloignées du corps central 3d que les pattes 4a destinées à venir se crocheter sur le corps 3d. Les pions 4g montés dans les trous 3b alternent circonférentiellement avec les paires de pattes 4e, 4a.

Il en est de même des éléments filaires 1a, 1c, qui empêchent les balais de s'échapper ainsi que les ressorts 7, les ouvertures 3g réalisées dans les cages 3c pour le passage desdits éléments 1a, 1c étant de forme oblongue et ouvertes au niveau de l'embase E pour autoriser une usure maximum des balais 1.

On notera que le corps central 3d est intérieurement étagé en diamètre pour le passage d'un élément filaire de la connexion 6.

## Revendications

1. Montage porte balais pour machine électrique comportant deux pièces (3, 4) rapportées l'une sur l'autre, l'une (3) qui présente plusieurs cages de guidage (3c) qui reçoivent chacune un balai (1) et organe élastique (7), l'autre (4) qui constitue une pièce formant embase qui comporte des moyens permettant son assemblage sur un palier métallique (5), la pièce (4) formant embase comportant un moyeu (4h) recevant un élément annulaire (9) destiné à assurer le guidage en rotation de l'arbre (11) que présente ladite machine, **caractérisé en ce que** le moyeu (4h) est fermé à son extrémité destinée à être opposée à l'arbre de la machine, la pièce (4) formant embase étant apte à assurer par elle-même l'étanchéité par rapport au palier.

2. Montage selon la revendication 1, **caractérisé en ce que** la pièce (4) formant embase présente des pions de fixation (4d) destinés à traverser des trous complémentaires du palier (5).

3. Montage selon l'une des revendications précédentes, **caractérisé en ce que** les pions de fixation (4d) sont rivetés sur le palier (5).

4. Montage selon l'une des revendications précédentes, **caractérisé en ce que** l'élément annulaire (9) destiné à assurer le guidage en rotation de l'arbre de la machine est au moins partiellement maintenu par friction dans le moyeu.

5. Montage selon la revendication 1, **caractérisé en ce que** le moyeu (4h) présente un épaulement interne (4b) formant butée pour l'élément annulaire destiné à assurer le guidage en rotation de l'arbre de la machine.

6. Montage selon la revendication 5, **caractérisé en ce que** la pièce (3) qui porte les cages de guidage porte un corps central cylindrique qui coiffe le moyeu et qui est partiellement fermé par une paroi en retour (3e) qui, avec l'épaulement interne, empêche tout déplacement axial de l'élément annulaire destiné à assurer le guidage en rotation de l'arbre de la machine.

7. Montage selon la revendication 1, **caractérisé en ce que** la pièce formant embase porte au moins une proéminence (4c) de centrage destinée à être reçue dans une alvéole complémentaire non débouchante (5b) que présente le palier (5).

8. Montage selon la revendication 1, **caractérisé en ce qu'**un élément (8) de butée axiale est maintenu par friction à l'intérieur du moyeu (4h).

9. Montage selon la revendication précédente, **caractérisé en ce que** cet élément de butée axiale (8) est une bille.

10. Montage selon la revendication 1, **caractérisé en ce que** la pièce qui porte les cages de guidage (3c) présente un corps central (3d) qui coiffe le moyeu (4h) de la pièce (4) formant embase, **en ce que** les cages de guidage (3c) s'étendent en saillie vers l'extérieur par rapport au corps central (3d) et **en ce que** la pièce (4) formant embase présente en saillie des pattes élastiquement déformables (4a) destinées à venir se fixer chacune temporairement par encliquetage sur le corps central (3d) entre deux cages de guidage (3c).

11. Montage selon la revendication 10, **caractérisé en ce que** la pièce (4) formant embase (E) présente en saillie des pions de fixation (4g) traversant chacun, entre deux cages de guidage (3c), un trou complémentaire (3d) réalisé dans une oreille (3f) reliant l'une des cages de guidage (3c) au corps central (3d).

12. Montage selon la revendication 11, **caractérisé en ce que** la pièce formant embase comporte des pattes en forme de crochet destinées à recevoir un élément filaire destiné à relier un balai à la masse.

13. Montage selon la revendication 12, **caractérisé en ce que** les pattes (4e), en forme de crochet, sont implantées à l'extérieur du corps central (3d) entre deux cages de guidage (3c).

14. Montage selon la revendication 13, **caractérisé en ce que** les pattes (4e), en forme de crochet, sont groupées par paire avec les pattes élastiquement déformables (4a) entre deux cages de guidage (3c) à l'extérieur du corps central (3d) et **en ce que** lesdites paires alternent circonférentiellement avec les oreilles (3f).

15. Montage selon la revendication 10, **caractérisé en ce que** des moyens de détrompage (3h, 4h) interviennent entre les deux pièces (3, 4).

## Patentansprüche

1. Bürstenhalteranordnung für eine elektrische Maschine mit zwei aneinander angefügten Teilen (3, 4), von denen eines (3) mehrere Führungskäfige (3c) aufweist, die jeweils eine Kohlebürste (1) und ein elastisches Organ (7) aufnehmen, während das andere (4) ein als Fußstück dienendes Teil bildet, das Mittel umfaßt, die seine Anbringung an einem Lagerschild aus Metall (5) ermöglichen, wobei das als Fußstück dienende Teil (4) eine Nabe (4h) umfaßt, die ein ringförmiges Element (9) aufnimmt, das dazu bestimmt ist, die Drehführung der Welle (4), welche die besagte Maschine aufweist, sicherzustellen, **dadurch gekennzeichnet, daß** die Nabe (4h) an ihrem Ende, das dazu bestimmt ist, entgegengesetzt zur Welle der Maschine angeordnet zu sein, verschlossen ist, wobei das als Fußstück dienende Teil (4) selbst die Abdichtung im Verhältnis zum Lagerschild sicherstellen kann.

2. Anordnung nach Anspruch 1, **dadurch gekennzeichnet, daß** das als Fußstück dienende Teil (4) Befestigungsstifte (4d) aufweist, die dazu bestimmt sind, durch formschlüssige Löcher des Lagerschilds (5) hindurchzugehen.

3. Anordnung nach einem der vorangehenden Ansprüche, **dadurch gekennzeichnet, daß** die Befestigungsstifte (4d) am Lagerschild (5) aufgenietet sind.

4. Anordnung nach einem der vorangehenden Ansprüche, **dadurch gekennzeichnet, daß** das ringförmige Element (9), das dazu bestimmt ist, die Drehführung der Welle der Maschine sicherzustellen, wenigstens teilweise durch Reibung in der Nabe gehalten wird.

5. Anordnung nach Anspruch 1, **dadurch gekennzeichnet, daß** die Nabe (4h) eine innere Schulter (4b) aufweist, die einen Anschlag für das ringförmige Element bildet, das dazu bestimmt ist, die Drehführung der Welle der Maschine sicherzustellen.

6. Anordnung nach Anspruch 5, **dadurch gekennzeichnet, daß** das Teil (3), das die Führungskäfige trägt, einen zylindrischen Mittelkörper trägt, der die Nabe abdeckt und der teilweise durch eine zurückspringende Wand (3e) verschlossen ist, die zusammen mit der inneren Schulter jede axiale Verschiebung des ringförmigen Elements verhindert, das dazu bestimmt ist, die Drehführung der Welle der Maschine sicherzustellen.

7. Anordnung nach Anspruch 1, **dadurch gekennzeichnet, daß** das als Fußstück dienende Teil wenigstens einen Zentriervorsprung (4c) trägt, der dazu bestimmt ist, in eine nicht durchgehende formschlüssige Aufnahme (5b) eingesetzt zu erden, die der Lagerschild (5) aufweist.

8. Anordnung nach Anspruch 1, **dadurch gekennzeichnet, daß** ein axiales Anschlagelement (8) durch Reibung im Innern der Nabe (4h) gehalten wird.

9. Anordnung nach dem vorangehenden Anspruch, **dadurch gekennzeichnet, daß** dieses axiale Anschlagelement (8) eine Kugel ist.

10. Anordnung nach Anspruch 1, **dadurch gekennzeichnet, daß** das Teil, das die Führungskäfige (3c) trägt, einen Mittelkörper (3d) aufweist, der die Nabe (4h) des als Fußstück dienenden Teils (4) abdeckt, daß sich die Führungskäfige (3c) im Verhältnis zum Mittelkörper (3d) nach außen vorstehend erstrecken und daß das als Fußstück dienende Teil (4) vorstehend elastisch verformbare Ansätze (4a) aufweist, die dazu bestimmt sind, jeweils vorübergehend durch Verrastung am Mittelkörper (3d) zwischen zwei Führungskäfigen (3c) befestigt zu werden.

11. Anordnung nach Anspruch 10, **dadurch gekennzeichnet, daß** das als Fußstück (E) dienende Teil (4) vorstehend Befestigungsstifte (4g) aufweist, die jeweils zwischen zwei Führungskäfigen (3c) durch ein formschlüssiges Loch (3d) hindurchgehen, das in einen Lappen (3f) eingearbeitet ist, der einen der Führungskäfige (3c) mit dem Mittelkörper (3d) verbindet.

12. Anordnung nach Anspruch 11, **dadurch gekennzeichnet, daß** das als Fußstück dienende Teil hakenförmige Ansätze umfaßt, die dazu bestimmt sind, ein Drahtelement aufzunehmen, dessen Aufgabe darin besteht, eine Kohlebürste mit der Masse zu verbinden.

13. Anordnung nach Anspruch 12, **dadurch gekennzeichnet, daß** die hakenförmigen Ansätze (4e) außerhalb des Mittelkörpers (3d) zwischen zwei Führungskäfigen (3c) angeordnet sind.

14. Anordnung nach Anspruch 13, **dadurch gekennzeichnet, daß** die hakenförmigen Ansätze (4e) zu Paaren mit den elastisch verformbaren Ansätzen (4a) zwischen zwei Führungskäfigen (3c) außerhalb des Mittelkörpers (3d) gruppiert sind und daß sich die besagten Paare umfangsmäßig mit den Lappen (3f) abwechseln.

15. Anordnung nach Anspruch 10, **dadurch gekennzeichnet, daß** zwischen den beiden Teilen (3, 4) Einbaumarkierungsmittel (3h, 4h) zum Einsatz kommen.

## Claims

1. A brush holder unit for an electrical machine, comprising two parts attached to each other, one of the parts (3) having a plurality of guide cages (3c), each of which receives one brush (1) with a springy member (7), the other part (4) being a base member which includes means whereby it can be assembled on a metallic bearing (5), the base member (4) comprising a hub (4h) receiving an annular element (9) adapted for guiding in rotation the shaft (11) of the said machine, **characterised in that** the hub (4h) is closed at that one of its ends which is arranged to be opposed to the shaft of the machine, the base member (4) being adapted to be self-sealing with respect to the bearing.

2. A unit according to Claim 1, **characterised in that** the base member (4) has fastening pins (4d) arranged to extend through complementary holes in the bearing (5).

3. A unit according to one of the preceding Claims, **characterised in that** the fastening pins (4d) are riveted on the bearing (5) .

4. A unit according to one of the preceding Claims, **characterised in that** the annular element (9) for guiding the shaft of the machine in rotation is retained in the hub at least partly by friction.

5. A unit according to Claim 1, **characterised in that** the hub (4h) has an internal shoulder (4b) constituting an abutment for the annular element that guides the shaft of the machine in rotation.

6. A unit according to Claim 5, **characterised in that** the part (3) that carries the guide cages carries a central cylindrical body which surrounds the hub and which is partly closed by a return wall (3e) which, with the internal shoulder, prevents any axial displacement of the annular element that guides the shaft of the machine in rotation.

7. A unit according to Claim 1, **characterised in that** the base member carries at least one centring projection (4c) which is arranged to be received in a complementary blind opening (5b) formed in the bearing (5).

8. A unit according to Claim 1, **characterised in that** an axial abutment element (8) is retained by friction within the hub (4h).

9. A unit according to the preceding Claim, **characterised in that** the axial abutment (8) is a ball.

10. A unit according to Claim 1, **characterised in that** the piece that carries the guide cages (3c) has a central body (3d) which surrounds the hub (4h) of the base member (4), **in that** the guide cages (3c) project outwards from the central body (3d), and **in that** the base member (4) has resiliently deformable projecting lugs (4a), each of which is adapted to be snap-fitted temporarily on the central body (3d) between two guide cages (3c).

11. A unit according to Claim 10, **characterised in that** the base member (4), which defines a base (E), has projecting fastening pins (4g), each of which extends, between two guide cages (3c), through a complementary hole (3d) formed in an ear (3f) which joins one of the guide cages (3c) to the central body (3d).

12. A unit according to Claim 11, **characterised in that** the base member includes hook-shaped lugs adapted to receive a filamentary element for connecting a brush to earth.

13. A unit according to Claim 12, **characterised in that** the hook-shaped lugs (4e) are located outside the central body (3d), between two guide cages (3c).

14. A unit according to Claim 13, **characterised in that** the hook-shaped lugs (4e) are grouped in pairs with the resiliently deformable lugs (4a) between two guide cages (3c) on the outside of the central body (3d), and **in that** the said pairs are arranged alternately , in the circumferential sense, with the ears (3f).

15. A unit according to Claim 10, **characterised in that** separating means (3h, 4h) are interposed between the two parts (3, 4).
